Europäisches Patentamt

European Patent Office

Office européen des brevets

(19)

(11) Publication number: **0 105 164**
**B1**

(12) **EUROPEAN PATENT SPECIFICATION**

(45) Date of publication of patent specification: **30.09.87**

(21) Application number: **83108229.2**

(22) Date of filing: **20.08.83**

(51) Int. Cl.⁴: **C 22 B 1/08**, C 22 B 1/10,
C 01 F 7/60, C 22 B 34/12

(54) Process for the chlorination of oxidic materials.

(30) Priority: **02.09.82 GB 8225065**

(43) Date of publication of application:
**11.04.84 Bulletin 84/15**

(45) Publication of the grant of the patent:
**30.09.87 Bulletin 87/40**

(84) Designated Contracting States:
**BE CH DE FR GB IT LI NL**

(56) References cited:
**EP-A-0 029 699
FR-A-2 430 393
FR-A-2 492 360
GB-A-1 127 079
GB-A-1 601 085
US-A-1 865 008
US-A-1 878 013
US-A-3 466 169
US-A-4 105 752
US-A-4 284 607**

The file contains technical information
submitted after the application was filed and
not included in this specification

(73) Proprietor: **SCM CHEMICALS LIMITED
77 South Audley Street
London W1Y 6AD (GB)**

(72) Inventor: **Robinson, Michael
Pink Cottage Ulceby Road
Wooton S. Humberside (GB)**
Inventor: **Crosby, Alan David
1 Morton Close
Immingham Grimsby S. Humberside (GB)**
Inventor: **Clamp, Frank
91 High Street
Waltham Grimsby S. Humberside (GB)**
Inventor: **Talati, Kirit
126 Sanctuary Way
Grimsby S. Humberside (GB)**

(74) Representative: **Madgwick, Paul Roland et al
Ladas & Parry Isartorplatz 5
D-8000 München 2 (DE)**

(56) References cited:
**B.S.I. Methods for analysis and testing of coal
and coke, Part 12, 1980
Clifford A. Hampel, The Encyclopedia of
Chemistry, 3rd Edition, pages 182-184
Kirk-Othmer Encyclopedia of Chemical
Technology, 3rd Edition, Vol. 6, p. 230-231**

Courier Press, Leamington Spa, England.

## Description

This invention relates to the fluidised bed chlorination of oxidic materials.

The scope of the invention encompasses both total chlorination, whereby both an iron fraction and another desired metal fraction in an oxidic material are chlorinated, or whereby a beneficiate, from which one fraction has already been removed, is chlorinated, and partial chlorination, whereby a beneficiate is produced by the preferential chlorination of an iron fraction or whereby a fraction more readily chlorinated than the iron fraction is removed from that iron fraction. The term 'oxidic material' is understood to include oxidic metalliferous deposits in the form of ores or sands and to include processed, for example beneficiated or partially beneficiated, ores or sands.

Many fluidised bed chlorination processes are conducted at temperatures in excess of 800°C and very often in excess of 900°C, for example up to 1200°C. Such processes are subject to operating difficulties as a result of the presence of often small but appreciable quantities of metal oxides which chlorinate to give lower melting point chlorides having a low vapour pressure with the result that, at such chlorination temperatures, they remain in the fluidised bed in the liquid form and, as the chlorination progresses, gradually build up in content in the bed and at some point cause bed agglomeration and cessation of the process. More specifically, magnesium, manganese and calcium chlorides, the oxides of some or all of which are usually present as minor constituents in oxidic ores, all have melting points below 800°C and very low vapour pressures. At 800°C, the maximum vapour partial pressure of manganese chloride is below 0.002, of magnesium chloride is below 0.0004 and of calcium chloride is below 0.00002 atmospheres (i.e. 0.2, 0.04 and 0.002 kPa respectively). It can be seen from this that even a small content of these chlorides can give rise to operational problems, particularly in continuously operated processes. Iron oxide present in an ore may also give rise to considerable difficulties since it may be present in substantial quantity and, while ferric chloride has a relatively high vapour pressure, ferrous chloride has not and notoriously gives rise to operational problems when formed. Ferrous chloride melts at below 700°C and at 800°C has a maximum vapour pressure of about 0.08 atmospheres (8 kPa).

Many of the problems outlined above would be alleviated, were the chlorination temperature to be below the melting point of the particular chloride or chlorides present in sufficient quantity to give rise to the problems, namely below 772°C where the chloride of concern is calcium chloride and below 708°C, 670°C or 650°C respectively when it is, respectively, magnesium chloride ferrous chloride or manganese chloride.

It has been proposed in European Patent Publication No. 0029699 to chlorinate titaniferous materials at temperatures of at least about 600°C by using a porous carbon reductant having a substantial internal porosity in the form of micropores of less than 20 Angstroms in diameter, namely active carbon. This active carbon may be produced by heating a high rank coal such as anthracite in a fluidised bed with air, carbon dioxide and/or steam until the micropores are produced. Typically, 5% or more of the carbon will be burned off. The surface area of the carbon may be 10—1500 m²/g. Advantageously, the surface area of the less than 20 Angstrom (2 nm) micropores is at least about 100 m²/g.

In the process described in European Patent Publication No. 0029699 the extent of reaction was deduced by observing the quantity of unreacted chlorine in the effluent from the chlorination bed and it is shown by examples of the chlorination of rutile ore containing 96% $TiO_2$ that, at a chlorination temperature of 650°C a consumption of chlorine in the region of 98% was achieved using a porous carbon formed by burning off 40% by weight of an anthracite in the presence of steam at 890°C to give a surface area of 680 m²/g but that a below 80% consumption of chlorine was achieved at the same temperature when only 15% by weight of the anthracite was burned off in air at 450°C to give a surface area of 163 m²/g.

British Patent No. 1601085 discloses the chlorination of a kaolinitic ore by chlorinating precalcined ore at 625°C to 900°C in the presence of a carbonaceous reductant and a gaseous boron trifluoride catalyst. The carbonaceous reductant may be selected indiscriminately from a petroleum coke, a coal, a coal coke or a lignite char if the boron trifluoride catalyst is used.

U.S. Patent 4,105,752 describes the chlorination of alumina in a fluidised bed in the presence of activated carbon, said carbon having been obtained by a process involving leaching with acid in the presence of oxygen and a subsequent heating.

U.S. Patent 4,284,607 describes the use of calcined green coke obtained by delayed coking or fluid coking or more preferably from petroleum coke in the chlorination of alumina in the presence of an alkali metal compound catalyst. The calcination is effected under nitrogen at 650—900°C and is preferably carried out in situ in the presence of the alumina.

French Patent specification 2,430,393 describes the use of carbon having a surface area of 40 to 70 m²/g (obtained for example in the production of acetylene) in the chlorination of alumina.

United States Patent No. 4284607 acknowledges the use of activated carbon to achieve the chlorination of aluminous materials and teaches the use of preformed green coke which is then calcined at at least 650°C but less than 900°C. Green petroleum coke is the preferred green coke. This patent exemplifies only the chlorination of alumina using calcined green petroleum coke.

While activated carbon is undoubtedly extremely effective in low temperature chlorinations it is expensive to produce. Commercial activated carbon requires a multistage production process and even the simpler production process disclosed in the above referenced European patent specification involves the consumption of a large proportion of the coal used as a starting material which in itself involves a cost penalty, particularly in those processes which require no external heat generation, except for process start-up, such as the chlorination of rutile. The use of a preformed coke, such as a petroleum coke, is also expensive in the large tonnages required in commercial scale processes.

The present invention is based on the finding that a cheaper source of carbon than activated carbon or petroleum coke may be utilised in the low temperatue chlorination of oxidic materials, without the need for a boron trifluoride catalyst or, indeed any other catalyst provided that the raw materials, both the source of the carbon and the ore, are carefully matched in a manner not taught in the art.

The present invention provides a process for the chlorination of an oxidic material selected from oxidic metalliferous deposits in the form of ores or sands and beneficiated or partially beneficiated ores or sands comprising contacting a fluidized mixture of particles of the oxidic material and particles of carbon at a temperature below 772°C but at least 500°C with chlorine the oxidic material being chlorinatable at a temperature below 772°C but at least 500°C in the presence of carbon that has been heated to increase its activity and removing from the oxidic material so contacted vaporous chlorides, characterized in that the oxidic material has a surface area of at least 3.5 m²/g and in that the carbon is the devolatilized product of heating a non-caking or weakly caking coal having a British Standard Swelling Number of from more than 1/2 to 6 1/2 in an atmosphere wherein oxygen comprises less than 10% by volume of the gases present until its surface area is at least 3 m²/g but not more than 50 m²/g. Preferably the coal has a British Swelling Number (British Standard 1016, Part 12, entitled "Caking and swelling properties of coal") of less than 3 1/2 and, preferably, of less than 1. Preferably the fluidised mixture contacted with chlorine has a temperature of below 650°C.

For the first time it has been realised that the surface area of the oxidic material is of importance if a form of carbon less reactive than active carbon is to be used at the low temperature envisaged by the present invention. One ore commonly stated to be chlorinated in the presence of active carbon, rutile, does not have the required surface area and does not chlorinate to the degree required for satisfactory operation according to the present invention. For this reason it has not been realised that for example, other titanium dioxide ores may be chlorinatable at low temperature using a less reactive carbon as has now proved to be the case with ilmenite which has the surface area specified by the present invention. Preferably, the surface area of the ore is at least 5.0 m²/g.

Certain ores, because of their chemical composition will not chlorinate at low temperature even in the presence of active carbon. Those skilled in the art will be aware of which ores exhibit such behaviour. Chromite is an example of an iron-containing ore which is not chlorinatable in the presence of active carbon at below 670°C and this ore is, therefore, excluded from the present invention. Whether an ore is within the invention or not on this score may be determined on a test scale using laboratory fluidised bed equipment by forming a fluidised bed of particles of the ore and particles of active carbon, the carbon being present in at least sufficient quantity to react with any oxygen evolved in or added to the bed, raising the temperature to the appropriate temperature as defined earlier, introducing a flow of 80% by volume chlorine into the bed and monitoring the quantity of chlorine in the effluent from the bed to determine whether reaction has taken place. In the typical commercial plant the chlorinator operates with a bed depth of approximately 3 metres, and it is desired to minimise the chlorine slip past the bed. It is not possible to operate a small capacity test rig with such a bed depth due to problems with the dynamics of fluidisation. However it is possible to operate a test rig with a bed depth of 1 to 1.5 metres, and from this to determine the acceptability of an ore in the full size plant. The use of such a unit is described in the examples. In such a test unit, preferably chlorine should not be present in the effluent gas in more than 25% by volume, particularly preferably not more than 20% by volume until the ore in the bed has been more than 50% by weight reacted. A similar test can be conducted at a lower temperature, for example below 650°C, if the ore contains a proportion of manganese oxide which is likely to be troublesome in practice, or at a higher temperature for example below 772°C if the ore contains only a proportion of calcium oxide which is likely to be troublesome in practice, for example more than 0.2% by weight of either of said oxides, or if it contains iron oxide and if the proposed conditions of chlorination may lead to the formation of ferrous chloride.

In order to produce a carbon having a surface area suitable for use according to this invention, fully caking coals must be avoided. Typical of fully caking coals are the bituminous coals having a British Standard Crucible Swelling number above about 6 1/2 which are commonly used in the production of coke because their swelling properties give the coke particles the physical strength often required in cokes. Fully caking coals give coked products having too low a surface area for use according to this invention and bituminous char, for example, usually has a surface area well below 1.0 m²/g. Cokes of non-coal origin, such as regular calcined petroleum coke, have a similarly unsuitable low surface area. Preferably the coal has a swelling number of greater than 1/2. Coals having a swelling number of 0 tend to produce carbon particles which disintegrate in use.

It is found that anthracites, while they produce excellent active carbon when treated under activating conditions, produce carbon products having too low a surface area for use according to this invention when treated under non-activating conditions. True lignites produce carbon having too little physical strength for fluidised bed use. Suitable coals for use in this invention are preferably selected from semi-anthracites, carbonaceous coals, certain para-bituminous coals and lignitous coals, as defined according to Seyler's Classification, subject to suitable swelling properties.

The coal is selected to be of fluidisable size, that is at least 37 microns, but is particularly preferably at least 75 microns and up to 4000 microns in diameter, and may suitably have a weight mean average diameter of from 500 to 1200 microns, since it is preferred that the carbon product produced by treating it is used as produced without such need for treatment to alter its particle size and since the above specified sizes are suitable for carbon for fluidised bed use.

The de-volatilising heat treatment of the coal to produce a carbon product usable according to this invention is to be contrasted with activation, which involves heating in the presence of oxygen and, possibly, of an activating gas such as steam or carbon dioxide and involves the combustion of a substantial part of the coal. In such processes the oxygen is often supplied as air. Some oxygen may fortuitously be present during the coal treatment according to the invention but it is preferably in less than 10% by volume of the atmosphere during the heating so that the quantity of coal combusted may be, preferably, less than 5% by weight and particularly preferably, less than 2.5% by weight.

Where the coal is weakly caking, for example having a British Standard Crucible Swelling Number of from 1 to 3 1/2, it is advantageously subjected to a pre-oxidation treatment to reducing the caking characteristics before the devolatilising heat treatment in the substantial absence of oxygen. Suitably, the pre-oxidation treatment may be conducted in the presence of an air atmosphere or an oxygen atmosphere, preferably of no greater than air concentration but containing at least 10% oxygen by volume, at a temperature of at least 150°C for example from 200°C—250°C and, necessarily, no greater than 350°C for a duration, preferably, of less than 120 minutes, and, particularly preferably, of from 30 minutes to 80 minutes. This treatment is suitably conducted in a fluidised bed. The heating in the substantial absence of oxygen is preferably conducted at a temperature of less than 1000°C, for example suitably less than 900°C, very suitably by raising the temperature progressively, from the pre-oxidation temperature where appropriate over a period of from 15 minutes to 150 minutes. This treatment is also preferably conducted in a fluidised bed. The need for pre-oxidation of a weakly caking coal may be reduced or eliminated by blending such a coal with a sufficient portion of a previously devolatilised coal so as to reduce the average caking properties of the blend e.g. to a British Standard Swelling Number of below 1. Where an excess of carbon is used in a chlorination this recycled excess may advantageously be utilised in this manner.

Advantageously the carbon product so produced may have a surface area of up to 50 m²/g for example, very suitably of up to 40 m²/g although lower surface area carbon for example having a total surface area below 20 or even below 15 m²/g is usable according to this invention. It will be appreciated that the surface area figures quoted herein relate to total surface area measured by low temperature nitrogen absorption after carefully degassing in Strohlein Area Meter followed by confirmation on B.E.T. apparatus.

The chlorination according to the present invention may itself be conducted by using known techniques. The oxidic material is preferably at least 75 microns and up to 1000 microns in diameter and may suitably have a weight mean average particle size of from 150 to 400 microns. The quantity of carbon is preferably at least sufficient to react with any oxygen added or evolved in the fluidised bed, for example at least 20%, e.g. from 20% to 40%, by weight of the bed.

The temperature of the chlorination may be controlled at the desired low value of control of the quantity of any added oxygen, by control of the velocity of the chlorinating gases and of the heat losses from the chlorinator so as to maintain a steady temperature state at a level initially achieved by pre-heating the fluidised bed.

The use of added oxygen will depend on whether it is necessary to provide heat to the chlorination process as may be the case for example, when an ore is being beneficiated by the selective chlorination of iron values. Preferably the quantity of any added oxygen is not more than 10% by volume of the gases at any point in the chlorination fluidised bed.

Suitably, the concentration of chlorine is from 20% to 85% by volume of the gases entering the fluidised bed. The vaporous chlorides leaving the fluidised bed may be treated by known means to recover them, for example by oxidation to recover chlorine if the purpose of the process has merely been to remove the metal values contained in the chlorides from the ore, not to produce a metal chloride product for later use. In beneficiation processes, for example, the chlorine is suitably recovered from the resulting iron chlorides for recycle.

Due to the low temperature employed in the practice of this invention, the tendency for bed agglomeration due to the presence of liquid chlorides is reduced or eliminated such chlorides either remaining in solid form in the bed residue or being blown out of the bed as dust in the effluent gases.

The present invention opens the use of a very economical source of carbon for the low temperature chlorination of oxidic materials. Due to the possibility of avoiding a burn-off of any substantial part of the coal, there is a substantial cost advantage over active carbon.

There are many ore leaching processes where an ore is subjected to a reduction step by heating at about from 500°C to 800°C in the presence of an excess of reducing agent, suitably coal, in the absence of air prior to acid leaching to remove one or more constituents therefrom. Before the leaching step the excess of reducing agent is removed from the ore. Where a non-caking or weakly caking coal is used as the reducing agent, the carbon thus recovered is suitable for use in the present process, enabling the present process to be carried out particularly economically in the vicinity of an acid leaching ore treatment process employing a reduction step.

The invention will now be illustrated by means of the following examples. Examples 1—3, 7 and 8 are not according to the invention and are inserted for comparative purposes. Examples 4—6 and 9 are according to the invention.

Example 1 describes the chlorination of ilmenite using a commercial petroleum coke as a source of carbon.

Example 2 describes the chlorination of ilmenite using carbon obtained by heating a strongly caking bituminous coal.

Example 3 describes the chlorination of ilmenite using carbon obtained by heating anthracite.

Examples 4—5 describe the chlorination of ilmenite using carbons according to the present invention.

Examples 6—7 describe the chlorination of different ilmenite beneficiates using carbons according to the invention but an ore within the invention in Example 6 and outside it in Example 7.

Example 8 describes an attempt to chlorinate rutile using carbon according to the invention.

Example 9 describes the chlorination of bauxite using carbon according to the invention.

In each example an apparatus consisting of a fused silica fluidised bed reactor enclosed in a gas fired furnace is used, mixed fluidisation and reaction gases are fed into the base of the reactor via a conical distributor of fused silica, their proportions in the mixture being controlled by metering equipment. Reaction products are passed from the reactor top along a horizontal cooling duct to a cyclone and the gases remaining are then fed via a gas sampling point and a caustic scrubber to the atmosphere. A valve at the base of the reactor enable the contents of the reactor to be dumped.

### Example 1 (comparative)

The reactor charge was 24 kg Western Australian ilmenite ore having a particle size of 75 to 300 μm and analysing 54.5% of $TiO_2$, 23.7% FeO, 17.0% $Fe_2O_3$ and small quantities of impurities including magnesium, manganese and calcium oxides, and 6 kg of Conoco regular calcined petroleum coke having a particle size less than 1700 μm. The surface area of the ilmenite was 5 $m^2/g$ and that of the coke 0.4 $m^2/g$. The reactor charge was fluidised with a flow of nitrogen and heated to 610°C by means of the gas furnace and during the heating 15 l/min of air was mixed with the fluidising gas. When the stated temperature was reached the fluidising gas was replaced by a mixture of 20 l/min $Cl_2$, 10 l/min air and 18 l/min $N_2$ giving a chlorine concentration in the fluidising gases of 41% v/v.

The temperature of the fluidised bed was maintained within the limits 610°C—630°C. Chlorine was detected in the bed effluent gases from the onset of the run and the level of chlorine increased sharply after 57 minutes to such an extent that it was visible to the eye, indicating a sudden decrease in the extent of chlorination to an unacceptable level. At this point the solids in the bed were found to contain 63% wt $TiO_2$, a substantial iron content mainly in the ferric form and a large quantity of residual coke. It was concluded, since the chlorination was not proceeding satisfactorily in the presence of the coke, that the initial 57 minutes of reaction had been due to the initial ferrous oxide content of the ore, acting as reductant instead of the coke in the process, being converted to ferric oxide. This was therefore judged to be a failure.

### Example 2 (comparative)

The reactor charge was 30 kg of the same ilmenite ore and 7.5 kg of devolatilised bituminous coking coal (Hapton, Lancs 27.4% W/W volatiles on a dry basis, Swelling no. 8 1/2) coal having a particle size of less than 2000 μm and a surface area of 0.3 $m^2/g$. As in example 1, the reactor charge was initially heated, to 610°C, while fluidised with nitrogen, and the bed temperature maintained between the limits 610—630°C during the run. The fluidising gas during the run contained 30% v/v $Cl_2$. After 45 minutes of reaction the chlorine slip had increased to give an effluent chlorine concentration of more than 10% v/v. At this point the chlorine concentration in the fluidising gas was reduced to 10% v/v but the chlorine slip remained at a 9% v/v content on the effluent gas, showing that reaction had substantially ceased. The bed was found to contain a substantial quantity of iron oxide and of carbon. This run was therefore judged to be a failure.

### Example 3 (comparative)

Example 2 was repeated except that the carbon was a devolatilised rank 101 anthracite having a particle size of less than 2000 μm and a surface area of 1.5 $m^2/g$ and the bed was initially heated to 600°C. The fluidising gas during the run contained 20% v/v $Cl_2$. After 69 minutes of reaction the chlorine slip had risen to greater than 10% v/v in the effluent gases after which a reduction to 10% v/v $Cl_2$ still gave a chlorine concentration in the effluent gases of 8% v/v. Again the reaction had ceased leaving a substantial quantity of iron values unchlorinated and carbon unconsumed. This run was therefore judged to be a failure.

## Example 4

A slightly caking lignitous hard coal from Markham, Doncaster having a British Standard Swelling Number of 2, a rank of 802 and a content of volatile matter of 38% on a dry basis was blended with an equal weight of the same coal which had previously been subjected to this treatment. The resulting blend was introduced into a devolatilising furnace at 780°C whereupon the temperature fell to 30°C over 26 minutes and was then raised to 950°C over a further 15 minutes in a nitrogen atmosphere.

The coal fraction in the blend had then been devolatilised and the blend had a particle size of less than 2000 μm and a surface area of 8 m²/g. The reactor charge was 30 kg of the same ilmenite ore as in the previous examples and 7.5 kg of the devolatilised coal blend giving a fluidised bed depth of 1.3 m. The reactor was heated to 550°C, by means of the gas furnace, while being fluidised with nitrogen and the temperature during the subsequent run in which the fluidising gas was 22 l/min $Cl_2$, 10 l/min air and 22 l/min $N_2$, was maintained between 590°C and 625°C. The run was continued for 3 hours with no slippage of chlorine through the bed, this time being calculated to be sufficient to chlorinate all the iron in the ore. At this point the concentration of chlorine in the fluidising gas was increased to 80% v/v and after a delay to allow stable measurements to be obtained the chlorine slip was found to be 18% v/v in the effluent gases. The concentration of chlorine in the fluidising gas was then decreased to 20% v/v and after a similar delay the chlorine slip was found to be 5.5% v/v. It is concluded that a bed of, e.g., 3 m fluidised depth could be operated with substantially complete chlorine utilisation.

## Example 5

Example 4 was repeated except that the carbon was Reject Smokeless Fuel (available from the National Coal Board — Markham Coal devolatilised at 400°C) which was introduced into a furnace at 500°C, whereupon the temperature fell to 170°C, and was then heated to 950°C, over 210 minutes all under nitrogen. The surface area of this carbon was 18 m²/g. The chlorination run proceeded without chlorine slip for 3 hours as before. The chlorine slip at 80% by volume chlorine in the fluidising gas was 14% v/v and that at 20% by volume chlorine was less than 0.1% v/v. It is concluded that a bed of 2—3 fluidised bed depth could be operated with substantially complete chlorine utilisation.

## Example 6

The reactor charge was 21.1 kg of beneficiated ilmenite (Benelite type available from Kerr-McGee Corporation) having a surface area of 11.5 m²/g and 5.3 kg of devolatilised Markham coal (British Standard Swelling No. 2 — heated at 200°C—260°C in air for 50 minutes and then heated to 900°C in nitrogen over 90 minutes) having a surface area of 9 m²/g. The charge was fluidised (bed depth 0.95 m) heated to 610°C under inert conditions and chlorine was then introduced at a concentration of 80% by volume in the fluidising gas. The run was conducted at 617°C—630°C.

The chlorine slip was 22% by volume in the effluent gases. However the chlorine slip at 20% v/v was found to be only 5.2% v/v. It is concluded that a bed of e.g. 3 m depth could be operated with substantially complete chlorine utilisation.

## Example 7 (comparative)

The reactor charge was 30 kg of an ilmenite benificiate available from Associated Mineral Consolidated (AMC) having a surface area of 3 m²/g and 7.5 kg of devolatilised Markham coal (British Standard Swelling No. 2 — heated in air at 200°C—260°C for 1 hour — introduced into a furnace under inert conditions at 200°C whereupon the temperature fell to 100°C and was then raised to 820°C over 130 minutes) having a surface area of 11.6 m²/g. The charge was fluidised and heated to 610°C under inert conditions and chlorine was then introduced at 80% v/v concentration in the fluidising gas. An initial period of reaction was observed, possibly due to the action of $Ti_2O_3$ present in this ore as an internal reductant. After 90 minutes of operation the chlorine slip was such that it was much greater than the capacity of the measuring instrument. The chlorine concentration in the fluidising gas was then reduced to 15% v/v after which the chlorine slip reduced only to 11%—12 1/2% v/v with little visual indication of chlorine in the off-gases. This run was therefore judged to be a failure.

## Example 8

The reactor charge was 30 kg Australian Rutile ore having a surface area of less than 0.1 m²/g and 7.5 kg of devolatilised coal (Merthyr Valley semi-anthracite Coal, Rank 201, 11.9% v/v volatiles on a dry basis, British Swelling No. below 1) which did not require pre-oxidation but was introduced into a furnace under nitrogen at 200°C whereupon the temperature fell to 50°C, remained at 50°C for 30 minutes and was then raised to 500°C over 10 minutes and then to 800°C over a further 125 minutes), having a surface area of 11.9 m²/g and a particle size of less than 2000 μm. The charge was fluidised giving a bed depth of 1.3 m and heated to 600°C under inert conditions. Chlorine was then introduced at a concentration of 80% by volume in the fluidising gas which also contained air (45 l/min $Cl_2$, 5 l/min air, 5 l/min $N_2$). The run was conducted at 630°C—640°C and chlorine slip was found to be above the capacity of the measuring instrument, although a small quantity of $TiCl_4$ was evident. The concentration of chlorine in the fluidising gas was reduced to 50% v/v keeping the quantity of oxygen and the total fluidising gas flow constant. The amount of chlorine slip was still above the capacity of the instrument. The concentration of chlorine was then similarly reduced to 25% v/v in the fluidising gas and the chlorine slip was measured at 15.5% v/v in the effluent gases. This run was therefore judged to be a failure.

### Example 9

The reactor charge was 22 kg Ghanaian Bauxite having a surface area of 64 $m^2/g$ and a particle size of below 710 μm and analysing 50% $Al_2O_3$, 14.7% $Fe_2O_3$ with water of hydration, together with 7.5 kg of devolatilised Markham coal (British Standard Swelling No. 2 — heated in air at 200°C—260°C for 1 hour — introduced into a furnace under inert conditions at 250°C whereupon the temperature fell to 210°C and, after 1 hour, raised to 800°C over 110 minutes) having a surface area of 35 $m^2/g$ and a particle size below 2000 μm.

The charge was fluidised with nitrogen and heated to 600°C to dry the ore to give an analysis of the ore of 72.4% $Al_2O_3$, 21.9% $Fe_2O_3$ and a surface area of 80 $m^2/g$. Chlorine was then introduced into the fluidising gas to give a concentration of 20% v/v. The run temperature was controlled at between 595°C and 635°C with the assistance of the addition of 10 l/min of air during part of the run. The bed effluent gases contained red ferric chloride fumes and no detectable chlorine. When a quantity of chlorine calculated to be sufficient to react with the iron content of the ore had been added the run was stopped and the bed was removed from the reactor and washed with dilute HCl (pH3), to remove residual iron salts, and dried. The resulting material analysed 92.5% $Al_2O_3$ 5% $Fe_2O_3$ and had a surface area of 118 $m^2/g$. The $Al_2O_3$ was amorphous, alpha-alumina being absent.

The fluidised bed reactor was washed out and dried. The bed material was recharged and heated to 600°C under nitrogen. Chlorine was then introduced into the fluidising gas for the chlorination of the alumina the flow being 48 l/min $Cl_2$, 3 l/min air and 9 l/min $N_2$ to give a chlorine concentration of 80% v/v. The bed temperature was maintained at from 605°C—620°C and the chlorine slip was measured as 17% v/v in the effluent gases.

When the fluidising gas was altered to 12 l/min $Cl_2$, 15 l/min air and 33 l/min $N_2$ to give a chlorine concentration of 20% v/v the chlorine slip was below 0.1% v/v in the effluent gases. It was concluded that a bed of twice the depth actually present during the alumina chlorination could be operated with substantially complete chlorine utilisation.

Aluminium chloride having a pale yellow colour analysing 95.8% Al $Cl_3$ and 4.2% of $FeCl_3$ was condensed from the bed effluent gases.

### Claims

1. A process for the chlorination of an oxidic material selected from oxidic metalliferous deposits in the form of ores or sands and beneficiated or partially beneficiated ores or sands comprising contacting a fluidized mixture of particles of the oxidic material and particles of carbon at a temperature below 772°C but at least 500°C with chlorine, the oxidic material being chlorinatable at a temperature below 772°C but at least 500°C in the presence of carbon that has been heated to increase its activity, and removing from the oxidic material so contacted vaporous chlorides, characterized in that the oxidic material has a surface area of from 3.5 $m^2/g$ and in that the carbon is the devolatilized product of heating a non-caking or weakly caking coal having a British Standard Swelling Number of from more than 1/2 to 6 1/2 in an atmosphere wherein oxygen comprises less than 10% by volume of the gases present until its surface area is at least 3 $m^2/g$ but not more than 50 $m^2/g$.

2. A process as claimed in claim 1, wherein the oxidic material is an ore.

3. A process as claimed in claim 1 or 2, wherein the oxidic material has a surface area of at least 5 $m^2/g$.

4. A process as claimed in any preceding claim, wherein the carbon is the product of heating a coal selected from semi-anthracites, carbonaceous coals, para-bituminous coals and lignitous coals.

5. A process as claimed in claim 4, wherein the carbon has a British Standard Swelling Number of from 1 to 3 1/2.

6. A process as claimed in any preceding claim, wherein less than 5% by weight of the coal is combusted during the heating.

7. A process as claimed in any preceding claim, wherein the heating is conducted at a temperature above 350°C and not more than 1000°C.

8. A process as claimed in any preceding claim, wherein the coal has a British Standard Swelling Number of from 1 to 3 1/2 and is subjected to an atmosphere containing at least 10% of oxygen by volume at a temperature of from 150°C to 350°C for from 30 minutes to 120 minutes before the heating in an atmosphere containing less than 10% oxygen by volume.

9. A process as claimed in claim 8, wherein the atmosphere contains no more oxygen than ambient air.

10. A process as claimed in claim 8 or 9, wherein the raising of the temperature from that of the heating in the presence of at least 10% by volume of oxygen to that of the heating in the substantial absence of oxygen takes place over a period of from 15 minutes to 150 minutes.

11. A process as claimed in any one of claims 1 to 7, wherein the coal has a British Standard Swelling Number of from 1 to 3 1/2 and is previously blended with a sufficient portion of a product previously prepared according to any one of claims 1 to 10 to reduce the average British Standard Swelling Number of the blend to below 1.

12. A process as claimed in any preceding claim, wherein the chlorination is conducted by means of a free chlorine containing fluidizing gas, the concentration of the chlorine in said gas entering the bed being from 20% to 85% by volume and the quantity of the carbon is at least 20% by weight of the fluidized bed.

13. A process as claimed in any one of claims 1 to 12, for the treatment of ilmenite or bauxite to remove iron values therefrom.

## Patentansprüche

1. Verfahren zum Chlorieren eines oxidischen Gutes, das ausgewählt ist aus den oxidischen metallhaltigen Lagerstätten in Form von Erzen oder Sanden und angereicherten oder teilweise angereicherten Erzen und Sanden, in dem ein fluidisiertes Gemisch aus Teilchen des oxidischen Gutes und Kohlenstoffteilchen bei einer Temperatur von mindestens 500°C und unter 772°C mit Chlor kontaktiert wird, wobei das oxidische Gut bei einer Temperatur von mindestens 500°C und unter 772°C in Gegenwart von Kohlenstoff chlorierbar ist, der zum Erhöhen seiner Aktivität erhitzt worden ist, und von dem derart kontaktierten oxidischen Gut dampfförmige Chloride entfernt werden, dadurch gekennzeichnet, daß das oxidische Gut eine spezifische Oberfläche von mindestens 3,5 m²/g hat und daß der Kohlenstoff das Schwelprodukt ist, das erhalten worden ist, indem eine nichtbackende oder nur schwach backende Kohle mit einem nach britischer Norm bestimmten Blähgrad (British Standard Swelling Number) von über 1/2 bis 6 1/2 in einer Atmosphäre, deren Sauerstoffgehalt weniger als 10 Vol.% der vorhandenen Gase beträgt, so lange erhitzt wird, bis die Kohle eine spezifische Oberfläche von mindestens 3 m²/g, aber nicht über 50 m²/g hat.

2. Verfahren nach Anspruch 1, dadurch gekennzeichnet, daß das oxidische Gut ein Erz ist.

3. Verfahren nach Anspruch 1 oder 2, dadurch gekennzeichnet, daß das oxidische Gut eine spezifische Oberfläche von mindestens 5 m²/g hat.

4. Verfahren nach einem der vorhergehenden Ansprüche, dadurch gekennzeichnet, daß der Kohlenstoff das Produkt ist, das durch Erhitzen einer Kohle erhalten worden ist, die aus den teilanthrazitischen Kohlen, den kohlenstoffhaltigen Kohlen, den parabituminösen Kohlen und den Braunkohlen ausgewählt ist.

5. Verfahren nach Anspruch 4, dadurch gekennzeichnet, daß der Kohlenstoff einen nach britischer Norm bestimmten Blähgrad von 1 bis 3 1/2 hat.

6. Verfahren nach einem der vorhergehenden Ansprüche, dadurch gekennzeichnet, daß beim Erhitzen der Kohle weniger als 5 Gew.% derselben verbrannt werden.

7. Verfahren nach einem der vorhergehenden Ansprüche, dadurch gekennzeichnet, daß das Erhitzen bei einer Temperatur über 350°C und von höchstens 1000°C erfolgt.

8. Verfahren nach einem der vorhergehenden Ansprüche, dadurch gekennzeichnet, daß die Kohle einen nach britischer Norm bestimmten Blähgrad von 1 bis 3 1/2 hat und bei einer Temperatur von 150°C bis 350°C 30 Minuten bis 120 einer Atmosphäre ausgesetzt wird, die mindestens 10% Sauerstoff enthält, bevor die Kohle in einer Atmosphäre erhitzt wird, die weniger als 10 Vol.% Sauerstoff enthält.

9. Verfahren nach Anspruch 8, dadurch gekennzeichnet, daß die Atmosphäre nicht mehr Sauerstoff enthält als die Umgebungsluft.

10. Verfahren nach Anspruch 8 oder 9, dadurch gekennzeichnet, daß die Erhitzung der Temperatur von der Temperatur, bei der die Erhitzung in Gegenwart von mindestens 10 Vol.% Sauerstoff durchgeführt wird, auf die Temperatur, bei der die Erhitzung im wesentlichen in Abwesenheit von Sauerstoff in einem Zeitraum von 15 Minuten bis 150 Minuten durchgeführt wird.

11. Verfahren nach einem der Ansprüche 1 bis 7, dadurch gekennzeichnet, daß die Kohle einen nach britischer Norm bestimmten Blähgrad von 1 bis 3 1/2 hat und vorher mit einer solchen Menge eines vorher nach einem der Ansprüche 1 bis 10 erzeugten Produktes vermischt wird, daß das Gemisch einen nach britischer Norm bestimmten, durchschnittlichen Blähgrad unter 1 hat.

12. Verfahren nach einem der vorhergehenden Ansprüche, dadurch gekennzeichnet, daß die Chlorierung mit einem freies Chlor enthaltenden Fluidisierungsgas durchgeführt wird, das bei seinem Eintritt in die Wirbelschicht 20 bis 85 Vol.% Chlor enthält, und daß die Wirbelschicht mindestens 20 Gew.% Kohlenstoff enthält.

13. Verfahren nach einem der Ansprüche 1 bis 12 zum Entfernen von Eisen aus Ilmenit oder Bauxit.

## Revendications

1. Procédé de chloration d'une matière oxydée choisie parmi les gisements métallifères oxydés sous forme de minerais ou de sables et les minerais ou sables enrichis ou partiellement enrichis, qui consiste à mettre en contact un mélange fluidisé de particules de la matière oxydée et de particules de charbon à une température inférieure à 772°C mais d'au moins 500°C avec du chlore, la matière oxydée étant susceptible de chloration à une température inférieure à 772°C mais d'au moins 500°C en présence de charbon qui a été chauffé pour en augmenter l'activité et à soutirer de la matière oxydée ainsi mise en contact les chlorures à l'état de vapeur, caractérisé en ce que la matière oxydée présente une surface de contact d'au moins 3,5 m²/g et en ce que le charbon est le produit dévolatilisé de chauffage d'un charbon non agglutinant ou faiblement agglutinant présentant un indice de gonflement British Standard d'une valeur comprise entre plus de ½ jusqu'à 6½ dans une atmosphère dans laquelle l'oxygène représente moins de 10% en volume des gaz présents jusqu'à ce que sa surface de contact soit d'au moins 3 m²/g mais ne dépasse pas 50 m²/g.

2. Procédé selon la revendication 1, dans lequel la matière oxydée est un minerai.

3. Procédé selon la revendication 1 ou 2, dans lequel la matière oxydée présente une surface de contact d'au moins 5 m²/g.

4. Procédé selon l'une quelconque des revendications précédentes, dans lequel le carbone est le produit de chauffage d'un charbon choisi parmi les semi-anthracites, les charbons carbonés, les charbons parabitumineux et les charbons ligneux.

5. Procédé selon la revendication 4, dans lequel le carbone présente un indice de gonflement BS compris entre 1 et 3½.

6. Procédé selon l'une quelconque des revendications précédentes dans lequel le charbon brûlé pendant le chauffage représente moins de 5% en poids du charbon.

7. Procédé selon l'une quelconque des revendications précédentes, dans lequel on effectue le chauffage à une température supérieure à 350°C mais ne dépassant pas 1000°C.

8. Procédé selon l'une quelconque des revendications précédentes, dans lequel le charbon présente un indice de gonflement BS de 1 à 3½ et on le soumet à une atmosphère contenant au moins 10% d'oxygène en volume à une température de 150 à 350°C, pendant 30 à 120 minutes avant le chauffage dans une atmosphère contenant moins de 10% en volume d'oxygène.

9. Procédé selon la revendication 8, dans lequel l'atmosphère ne contient pas plus d'oxygène que l'air ambiant.

10. Procédé selon la revendication 8 ou 9, dans lequel l'élévation de la température à partir de celle du chauffage en présence d'au moins 10% en volume d'oxygène à celle du chauffage en l'absence pratique d'oxygène a lieu au cours d'une période de 15 à 150 minutes.

11. Procédé selon l'une quelconque des revendications 1 à 7, dans lequel le charbon présente un indice de gonflement BS de 1 à 3½ et il est préalablement mélangé avec une portion suffisante d'un produit précédemment préparé selon l'une quelconque des revendications 1 à 10 afin de réduire l'indice de gonflement moyen BS du mélange au dessous de 1.

12. Procédé selon l'une quelconque des revendications précédentes, dans lequel on effectue la chloration avec un gaz fluidisant contenant du chlore libre, la concentration du chlore dans ledit gaz admis dans le lit étant de 20 à 85% en volume et la quantité de carbone est d'au moins 20% en poids du lit fluidisé.

13. Procédé selon l'une quelconque des revendications 1 à 12, pour le traitement de l'ilménite ou de la bauxite pour en extraire le fer contenu.